# EUROPEAN PATENT APPLICATION

(11) **EP 3 231 652 A1**
(43) Date of publication of application: **18.10.2017**
(21) Application number: 17166293.5
(22) Date of filing: 12.04.2017
(51) Int. Cl.: B60K 6/445, B60K 6/38, F16H 63/34, F16H 63/48, B60W 20/00, B60W 30/20, B60W 10/18

(54) **TRANSMISSION SYSTEM FOR HYBRID ELECTRIC VEHICLE**

(30) Priority: 13.04.2016 JP 2016080412; 03.10.2016 JP 2016195885
(71) Applicant: Toyota Jidosha Kabushiki Kaisha, Toyota-shi, Aichi-Ken 471-8571 (JP)
(72) Inventor: TOMITA, Makoto, TOYOTA-SHI, AICHI-KEN, 471-8571 (JP); OSHIMA, Keijiro, TOYOTA-SHI, AICHI-KEN, 471-8571 (JP); HORI, Tetsuo, TOYOTA-SHI, AICHI-KEN, 471-8571 (JP); TAKEUCHI, Tomoya, TOYOTA-SHI, AICHI-KEN, 471-8571 (JP)
(74) Representative: Intès, Didier Gérard André

(57) **Abstract**

A transmission system for a hybrid electric vehicle includes a planetary gear mechanism (10), a gear (25), a parking lock mechanism (80), and a resistance imposing device (100, 200, 300, 500). A parking meshing member (87) of the parking lock mechanism (80) acts so as to switch between a first state where a claw (87a) is in mesh with a parking gear (86) and a second state where the claw (87a) is out of mesh with the parking gear (86). The resistance imposing device (100, 200, 300, 500) includes a resistance imposing member (102, 202, 302, 506) configured to impose a rotational resistance on the parking gear (86) or a third rotating element (13) of the planetary gear by coming in contact with the parking gear (86) or the third rotating element (13). The resistance imposing device (100, 200, 300, 500) is configured to operate the resistance imposing member (102, 202, 302, 506) such that a larger rotational resistance is imposed on the parking gear (86) or the third rotating element (13) in the first state than in the second state.

## Description

### 1. Field of the Invention

The present invention relates to a transmission system for a hybrid electric vehicle.

### 2. Description of Related Art

A hybrid electric vehicle that can transmit power (torque) generated by an internal combustion engine to a rotating electric machine and drive wheels through a planetary gear mechanism has previously been known. Such a vehicle is also equipped with a parking mechanism that locks the drive wheels when a parking range is selected through operation of a shift lever.

For example, the hybrid electric vehicle of Japanese Patent Application Publication No. 2005-210796 includes a parking mechanism and a planetary gear mechanism that has a carrier connected to an engine, a sun gear coupled to a power generator, and a ring gear connected to a drive motor and drive wheels through a predetermined gear. The parking mechanism is configured so that, when the parking range is selected, a claw of a parking pawl of the parking mechanism engages with a parking gear that is formed integrally with the ring gear. In this vehicle, if the engine output torque fluctuates widely, for example, at engine start while the claw of the parking mechanism is in mesh with the parking gear, the drive motor is controlled so as to smooth out the torque fluctuation, and a torque output from the motor thus controlled is transmitted to the parking mechanism. This torque is transmitted to reduce hammering noise attributable to a play (backlash) between the claw and teeth of the parking gear.

### SUMMARY OF THE INVENTION

In view of quietness of a vehicle, it is desirable to reduce the hammering noise also when the engine is in an independent operation (such as no-load operation) as in an idle operation state. However, the following problems arise in a transmission system which has a gear that transmits power by being interposed among a gear (here, specifically a ring gear) constituting a part of the parking mechanism, the drive wheels of the vehicle, and the drive motor, and which includes a backlash in each of a path through which a torque output from the drive motor is transmitted to the parking mechanism and a path through which this torque is transmitted to the drive wheels. If the backlash between the drive motor and the drive wheels is closed by a torque output from the drive motor before the backlash between the drive motor and the parking mechanism is closed, this torque is transmitted to the drive wheels without being transmitted to the parking mechanism. Thus, one problem in this transmission system is that applying a torque from the drive motor while the claw of the parking mechanism is in mesh with the parking gear cannot sufficiently close the backlash in the parking mechanism, so that it is difficult to reduce hammering noise in the parking mechanism attributable to engine torque fluctuations. Another problem is that, if a torque is applied using a power generator disposed coaxially with an output shaft of the engine while the engine is in independent operation, the torque is applied by the power generator in a reverse rotation direction of the engine, which increases a load on the engine and is therefore undesirable.

The present invention is applied to a hybrid electric vehicle including a transmission system that transmits a torque output from a drive motor and an engine, and provides a transmission system for a hybrid electric vehicle that reduces hammering noise in a parking mechanism attributable to engine torque fluctuations occurring while a parking range is selected and the parking mechanism is working, even when such engine torque fluctuations are small.

A transmission system for a hybrid electric vehicle according to one aspect of the present invention includes a planetary gear mechanism, a gear, a parking lock mechanism, and a resistance imposing device. The planetary gear mechanism includes a first rotating element, a second rotating element, and a third rotating element. The first rotating element is coupled to an engine. The third rotating element is coupled to a rotating electric machine and drive wheels to transmit power to the rotating electric machine and the drive wheels. The gear is interposed between the third rotating element on one side and the rotating electric machine and the drive wheels on the other side to transmit power from the third rotating element to the rotating electric machine and the drive wheels. The parking lock mechanism includes a parking gear and a parking meshing member. The parking gear is configured to rotate integrally with the third rotating element. The parking meshing member includes a claw configured to mesh with the parking gear. The parking meshing member acts so as to switch between a first state where the claw is in mesh with the parking gear and a second state where the claw is out of mesh with the parking gear, according to whether a parking range is selected. The resistance imposing device includes a resistance imposing member. The resistance imposing member is configured to impose a rotational resistance on the parking gear or the third rotating element by coming in contact with the parking gear or the third rotating element. The resistance imposing device is configured to operate the resistance imposing member so that a larger rotational resistance is imposed on the parking gear or the third rotating element in the first state than in the second state.

In the transmission system according to the above aspect, the resistance imposing device may operate the resistance imposing member in conjunction with an action of the parking meshing member such that the resistance imposing member is separated from the parking gear or the third rotating element in the second state, and the resistance imposing member is in contact with the parking gear or the third rotating element in the first state.

In the transmission system according to the above aspect, the resistance imposing member may be mechanically coupled to the parking meshing member. In the transmission system according to the above aspect, the resistance imposing device may include a drive unit and an electronic control unit. The drive unit may be configured to drive the resistance imposing member so as to change a state of contact between the resistance imposing member and the parking gear or the third rotating element. The electronic control unit may be configured to control the drive unit such that the resistance imposing member imposes a larger rotational resistance on the parking gear or the third rotating element in the first state than in the second state. In the transmission system according to the above aspect, the electronic control unit may be configured to control the drive unit such that the resistance imposing member imposes a larger rotational resistance on the parking gear or the third rotating element when the engine is in an independent operation.

In the transmission system according to the above aspect, the resistance imposing member may be configured to, in conjunction with an action of the parking meshing member, come in contact with tooth flanks of a tooth space of the parking gear different from a tooth space defined by tooth flanks in mesh with the claw in the first state.

In the transmission system according to the above aspect, the third rotating element may include a rotation restricting member that is provided so as to rotate integrally with the parking gear. The resistance imposing member may be configured to impose the rotational resistance on the third rotating element by coming in contact with the rotation restricting member. The resistance imposing device may be configured to operate the resistance imposing member such that a larger rotational resistance is imposed on the third rotating element in the first state than in the second state.

According to the transmission system having the above aspect, the resistance imposing member is brought in contact with the parking gear or the third rotating element by the resistance imposing device such that a larger rotational resistance is imposed in the first state where the parking range is selected and the claw is in mesh with the parking gear than in the second state where the claw is out of mesh with the parking gear. This contact resistance restricts movement of the parking gear or the third rotating element, such that movement of the claw and the parking gear relative to each other is restricted. Thus, it is possible to reduce hammering noise in the parking mechanism attributable to engine torque fluctuations occurring while the parking range is selected and the parking mechanism is working.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a skeleton diagram of a drive line of a hybrid electric vehicle according to a first embodiment of the present invention;
FIG. 2 is a view illustrating a configuration of a parking lock mechanism;
FIG. 3 is a block diagram showing a configuration of a control system of the hybrid electric vehicle of the first embodiment;
FIG. 4 is a schematic view illustrating collision noise (hammering noise) occurring in the drive line;
FIG. 5 is a schematic view illustrating a resistance imposing device of the first embodiment;
FIG. 6 is a schematic view illustrating a resistance imposing device of a second embodiment;
FIG. 7 is a schematic view illustrating a resistance imposing device of a third embodiment;
FIG. 8 is a schematic view illustrating a resistance imposing device of a modified example of the first embodiment;
FIG. 9 is a flowchart illustrating actions of the resistance imposing device of the modified example of the first embodiment;
FIG. 10 is a schematic view illustrating a resistance imposing device of a fifth embodiment;
FIG. 11 is a skeleton diagram of a modified example (Modified Example 1) of the drive line of the hybrid electric vehicle of the first embodiment;
FIG. 12 is a skeleton diagram of a modified example (Modified Example 2) of the drive line of the hybrid electric vehicle of the first embodiment; and
FIG. 13 is a skeleton diagram of a modified example (Modified Example 3) of the drive line of the hybrid electric vehicle of the first embodiment.

### DETAILED DESCRIPTION OF EMBODIMENTS

Embodiments of the present invention will be described in detail below with reference to the drawings. First, a first embodiment according to the present invention will be described. The first embodiment relates to a transmission system for a hybrid electric vehicle, and is applied to a hybrid electric vehicle as will be described below.

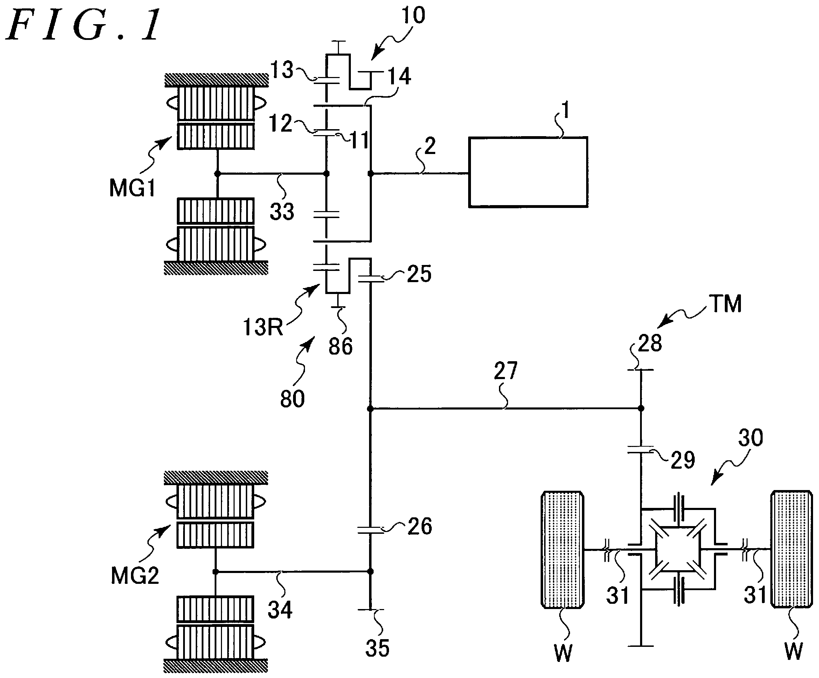

FIG. 1 is a skeleton diagram of a drive line in a vehicle according to the first embodiment. As shown in FIG. 1, the vehicle according to the first embodiment is a hybrid electric vehicle (HV) having an engine 1, a first rotating electric machine MG1, and a second rotating electric machine MG2 as power sources or prime movers.

As shown in FIG. 1 to FIG. 3, the vehicle includes the engine 1, a planetary gear mechanism 10, a differential 30, the first rotating electric machine MG1, the second rotating electric machine MG2, an HV electronic control unit (HV_ECU) 50, an MG electronic control unit (MG_ECU) 60, an engine electronic control unit (engine_ECU) 70, and a parking lock mechanism 80 that is a parking mechanism in this embodiment. In particular, a transmission system TM is installed between the engine 1 and the two rotating electric machines MG1, MG2 on one side and the drive wheels W on the other side, and the transmission system TM includes a resistance imposing device for reducing hammering noise, to be described later, in addition to the planetary gear mechanism 10 and the parking lock mechanism 80.

First, components other than the resistance imposing device will be described. The engine 1 that is an internal combustion engine converts combustion energy of fuel and outputs the energy as rotary motion of an output shaft. The output shaft of the engine 1 is connected to an input shaft 2 of the transmission system TM. The input shaft 2 is disposed coaxially with the output shaft of the engine 1, on an extension line of this output shaft. The input shaft 2 is fixed to a carrier 14 of the planetary gear mechanism 10.

The planetary gear mechanism 10 is connected to the engine 1, and can transmit rotation (power) of the engine 1 to the first rotating electric machine MG1, the differential 30, etc. The planetary gear mechanism 10 is of a single pinion type, and has a sun gear 11 (second rotating element), a planetary gear 12, a ring gear 13 (third rotating element), and the carrier 14 (first rotating element).

The ring gear 13 is disposed coaxially with the sun gear 11, on a radially outer side of the sun gear 11. The planetary gear 12 is disposed between the sun gear 11 and the ring gear 13 and in mesh with both the sun gear 11 and the ring gear 13. The planetary gear 12 is rotatably supported by the carrier 14. The carrier 14 is fixed to the input shaft 2 and rotates integrally with the input shaft 2. Accordingly, the planetary gear 12 is revolvable around a central axis of the input shaft 2 along with the input shaft 2, as well as is rotatable around an axis of the planetary gear 12 while being supported by the carrier 14.

A rotating shaft 33 of the first rotating electric machine MG1 is fixed to the sun gear 11, and the rotating shaft 33 rotates integrally with the sun gear 11. The rotating shaft 33 of the first rotating electric machine MG1 is disposed coaxially with the input shaft 2. A counter drive gear 25 is provided for the ring gear 13, and the counter drive gear 25 and the ring gear 13 rotate integrally. Thus, the ring gear 13 can output rotation (power), input from the first rotating electric machine MG1 or the engine 1, to the drive wheels W through the counter drive gear 25.

The counter drive gear 25 is in mesh with a counter driven gear 26. The counter driven gear 26 is connected to a drive pinion gear 28 through a counter shaft 27. The counter driven gear 26 and the drive pinion gear 28 rotate integrally. A reduction gear 35 is in mesh with the counter driven gear 26. A rotating shaft 34 of the second rotating electric machine MG2 is fixed to the reduction gear 35. Thus, rotation (power) output by the second rotating electric machine MG2 is transmitted to the counter driven gear 26 through the reduction gear 35. The reduction gear 35 has a smaller diameter than the counter driven gear 26, so that rotation (power) output by the second rotating electric machine MG2 is reduced in speed by the reduction gear 35 before being transmitted to the counter driven gear 26.

The drive pinion gear 28 is in mesh with a differential ring gear 29 of the differential 30. The differential 30 is connected to the drive wheels W through left and right drive shafts 31.

Thus, the ring gear 13 is connected to the drive wheels W through the counter drive gear 25, the counter driven gear 26, the drive pinion gear 28, the differential 30, and the drive shafts 31. The second rotating electric machine MG2 (the rotating shaft 34 thereof) is connected to a power transmission path between the ring gear 13 and the drive wheels W through the counter driven gear 26, and can transmit power to each of the ring gear 13 and the drive wheels W. Thus, the second rotating electric machine MG2 corresponds to the rotating electric machine of the present invention.

The first rotating electric machine MG1 and the second rotating electric machine MG2 include a function of a motor (electric motor) and a function of a power generator. The first rotating electric machine MG1 and the second rotating electric machine MG2 are connected to a battery (not shown) through an inverter (not shown). The first rotating electric machine MG1 and the second rotating electric machine MG2 can convert electricity supplied from the battery and output the electricity as mechanical power. Moreover, these rotating electric machines are driven by power input into the rotating shafts thereof, and can convert that mechanical power into electricity (can generate electricity). Electricity generated by the rotating electric machines MG1, MG2 can be stored in the battery through an inverter. For example, alternating-current synchronous machines can be used as the first rotating electric machine MG1 and the second rotating electric machine MG2.

In the vehicle of the first embodiment, the planetary gear mechanism 10, the counter drive gear 25, and the first rotating electric machine MG1 are disposed coaxially with the engine 1. The transmission system TM of the vehicle of the first embodiment has a configuration in which the input shaft 2 connected to the output shaft of the engine 1 and the rotating shaft 34 of the second rotating electric machine MG2 as the rotating electric machine of the present invention are disposed in parallel.

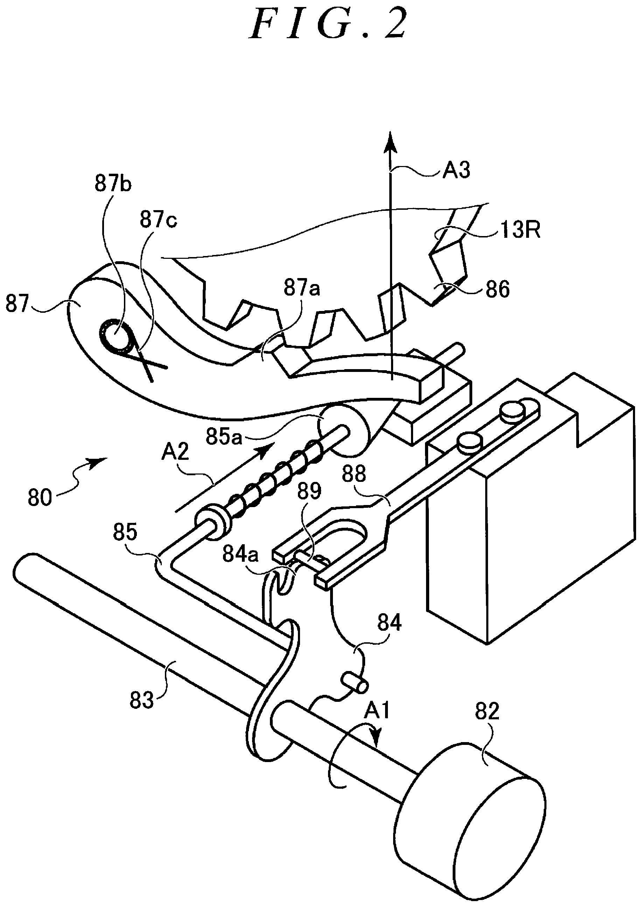

Now, the parking lock mechanism 80 will be described with reference to FIG. 2 and FIG. 1. FIG. 2 is a view illustrating a configuration of the parking lock mechanism 80. The parking lock mechanism 80 has a configuration for mechanically prohibiting rotation of the drive wheels W. In FIG. 2, the parking lock mechanism 80 includes a parking lock drive motor 82, and is activated to prevent travel of the vehicle on the basis of a control signal from an HV_ECU to be described later.

The parking lock mechanism 80 includes a shaft 83 that is driven to rotate by the parking lock drive motor 82, a detent plate 84 that is fixed to the shaft 83 and functions as a parking lock positioning member by rotating integrally with the shaft 83, and a rod 85 that is activated as the detent plate 84 rotates. As the shaft 83 is driven to rotate by the parking lock drive motor 82 and the detent plate 84 rotates accordingly, the parking lock mechanism 80 switches between a parking lock position (meshing position) corresponding to a P-range being selected and a parking unlock position (non-meshing position) corresponding to other shift positions. There are a plurality of shift positions including the P-range (parking range), an N-range, a D-range, and an R-range, and a shift lever is linked to one of these shift positions through operation by a driver. The parking lock mechanism 80 further includes a detent spring 88 that limits rotation of the detent plate 84 and fixes the shift position, a roller 89, a parking gear 86, and a parking lock pawl 87 that prohibits rotation of the parking gear 86 (i.e., locks the parking gear 86). The parking lock pawl 87 corresponds to the 'parking meshing member' of the present invention.

As shown in FIG. 1, the parking gear 86 is provided coaxially and integrally with the ring gear 13 that is an output gear of the planetary gear mechanism 10. The parking gear 86 is provided so as to rotate integrally with both the ring gear 13 and the counter drive gear 25 that rotates integrally with the ring gear 13, and rotates also in conjunction with the drive wheels W. A member combining the ring gear 13, and the parking gear 86 and the counter drive gear 25 rotating integrally with the ring gear 13 will be hereinafter referred to as a ring gear member 13R.

FIG. 2 shows a state where the parking lock mechanism 80 is in the parking unlock position (non-meshing position). In this state, the parking lock mechanism 80 is unlocked with a claw 87a of the parking lock pawl 87 being out of mesh with the parking gear 86 (specifically in mesh with none of tooth flanks of the parking gear 86), so that rotation of the drive wheels W is not prevented by the parking lock mechanism 80. The parking lock pawl 87 is provided so as to be located on an outer side in a radial direction around a rotational axis of the parking gear 86. A torsion spring 87c having elasticity in a direction away from the parking gear 86 is mounted on a support part 87b that turnably supports the parking lock pawl 87. The parking lock pawl 87 is disposed so that, as the parking lock pawl 87 moves toward an inner side in the radial direction against the elasticity of the torsion spring 87c, the claw 87a moves toward one of tooth spaces of a plurality of teeth of the parking gear 86 and engages with tooth flanks of that tooth space. Thus, when the P-range is not selected, the parking lock pawl 87 is maintained in the parking unlock position (non-meshing position) by the elasticity of the torsion spring 87c mounted on the support part 87b.

When the shaft 83 is rotated from this state in a direction of an arrow A1 by the parking lock drive motor 82 (that is activated when the P-range is selected), the detent plate 84 rotates in the same direction, and the rod 85 is pressed in a direction of an arrow A2 according to this rotation. As a result, the parking lock pawl 87 is pushed up in a direction of an arrow A3 by a tapered member 85a provided at a leading end (in the direction of the arrow A2) of the rod 85 against the elasticity of the torsion spring 87c. Meanwhile, as the detent plate 84 rotates, the roller 89 of the detent spring 88, which has been in the parking unlock position, tries to shift to the parking lock position (meshing position) beyond a bulge 84a of the detent plate 84. Then, when the detent plate 84 rotates to a position where the roller 89 shifts to the parking lock position, the claw 87a of the parking lock pawl 87 is pushed up to a position where the claw 87a meshes with the parking gear 86. As a result, rotation of the parking gear 86 is mechanically prohibited. In this way, in the parking lock position, the claw 87a of the parking lock pawl 87 as a predetermined non-rotating member (parking meshing member) meshes with the parking gear 86 that is provided so as to rotate integrally with the ring gear 13. Thus, in the parking lock position, travel of the vehicle is limited by prohibiting transmission of rotation between the ring gear 13 and the downstream drive wheels W in the drive line that transmits power of the engine 1 to the drive wheels W.

Now, description of the vehicle of the first embodiment will be resumed.

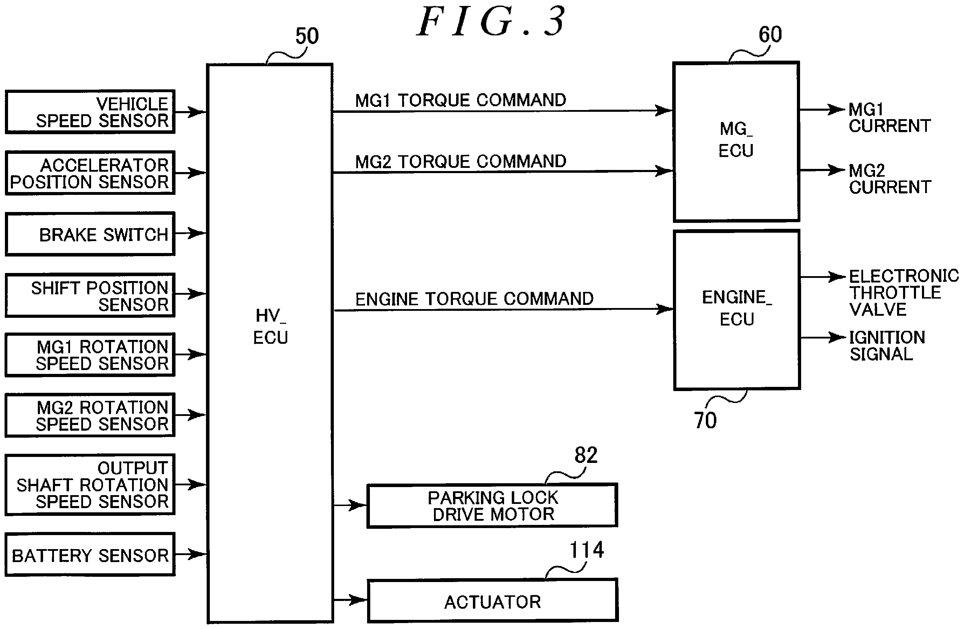

FIG. 3 is a block diagram showing a configuration of a control system in the vehicle of the first embodiment. As shown in FIG. 3, the vehicle of the first embodiment has the HV_ECU 50, the MG_ECU 60, and the engine_ECU 70. Each of the ECUs 50, 60, 70 is configured as an electronic control unit having a computer. The HV_ECU 50 has a function of integrally controlling the entire vehicle. The MG_ECU 60 and the engine_ECU 70 are each electrically connected to the HV_ECU 50. While the HV_ECU 50, the MG_ECU 60, and the engine_ECU 70 are substantially configured as one electronic control unit (control device) as a whole, these ECUs may instead be configured as an originally integral unit device.

The MG_ECU 60 can control the first rotating electric machine MG1 and the second rotating electric machine MG2. For example, the MG_ECU 60 can control an output torque of the first rotating electric machine MG1 by adjusting a value of current supplied thereto, and can control an output torque of the second rotating electric machine MG2 by adjusting a value of current supplied thereto. For example, when the first rotating electric machine MG1 generates electricity, the MG_ECU 60 can control the amount of electricity generated.

The engine_ECU 70 can control the engine 1. For example, the engine_ECU 70 can control an opening degree of an electronic throttle valve of the engine 1, control ignition of the engine 1 by outputting an ignition signal, and control injection of fuel into the engine 1. The engine_ECU 70 can control an output torque of the engine 1 by performing these controls.

A vehicle speed sensor, accelerator position sensor, brake switch, shift position sensor, MG1 rotation speed sensor, MG2 rotation speed sensor, output shaft speed sensor, battery sensor, etc. are connected to the HV_ECU 50. From these sensors, the HV_ECU 50 can acquire information such as a vehicle speed, accelerator position, state of depression of a brake pedal, range (shift position) selected, rotation speed of the first rotating electric machine MG1, rotation speed of the second rotating electric machine MG2, rotation speed of an output shaft (e.g., the counter shaft 27) of the transmission system TM, state of charge (SOC), etc.

On the basis of acquired information, the HV_ECU 50 calculates required values of a drive force, power, torque etc. for the vehicle. On the basis of the calculated required values, the HV_ECU 50 determines the output torque of the first rotating electric machine MG1 (MG1 torque), the output torque of the second rotating electric machine MG2 (MG2 torque), and the output torque of the engine 1 (engine torque), and determines a total output torque of these output torques. According to these determinations, the HV_ECU 50 outputs an MG1 torque command (value) and an MG2 torque command (value) to the MG_ECU 60. The HV_ECU 50 outputs an engine torque command (value) to the engine_ECU 70.

Upon detecting that the P-range is selected on the basis of an output of the shift position sensor, the HV_ECU 50 outputs a control signal to the parking lock drive motor 82 to activate this motor so as to switch the parking lock mechanism 80 to the parking lock position (meshing position). Alternatively, a link mechanism mechanically coupled to the shift lever may be used so that, when the P-range is selected through operation of the shift lever by a driver, the parking lock pawl 87 is directly activated by this link mechanism to bring the claw 87a in mesh with the parking gear 86.

As will be described later, when the resistance imposing device is configured to move the resistance imposing member by electronic control, the HV_ECU 50 (specifically a control unit of the HV_ECU 50) outputs an activation signal to an actuator (driving unit) 114, which drives the resistance imposing member, so that the resistance imposing member is brought in contact with the parking gear 86 or separated out of contact with the parking gear 86.

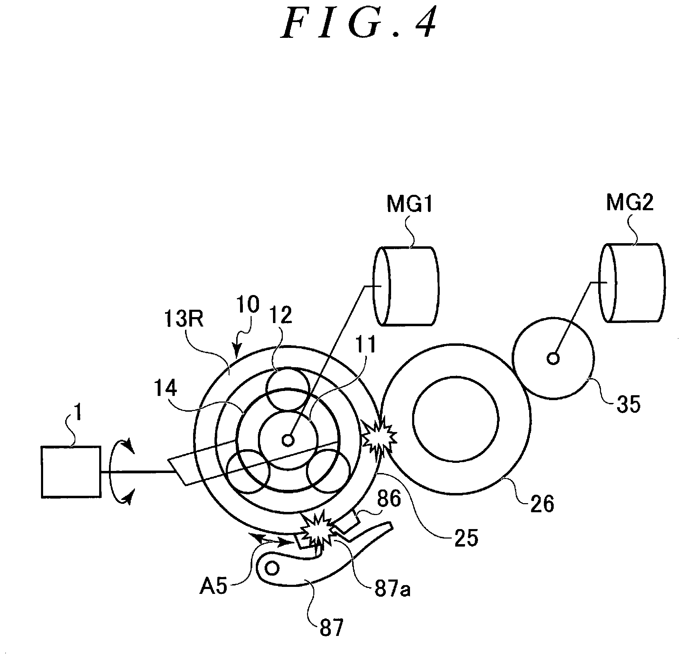

When the parking lock mechanism 80 is in the parking lock position, merely a force in a direction of pressing the claw 87a of the parking lock pawl 87 against the parking gear 86 is acting on the claw 87a. There is a play, or so-called backlash, between the claw 87a and tooth flanks of the parking gear 86 in mesh with the claw 87a. Accordingly, if the engine 1 enters an independent operation state, such as an idle operation state, while the vehicle is parked and the P-range is selected and therefore the claw 87a is in mesh with the parking gear 86, a force in a direction in which the ring gear 13, i.e., the parking gear 86, is rotated acts on the ring gear member 13R due to torque fluctuations of the engine 1. Independent operation refers to no-load operation of the engine 1. As this force acts on the ring gear member 13R, collision noise (hammering noise) occurs in the parking lock mechanism 80 between the claw 87a and the tooth flanks of the parking gear 86 in mesh with the claw 87a. FIG. 4 schematically shows a state where collision noise is occurring between the claw 87a and the parking gear 86. This collision noise occurs continuously as the ring gear member 13R moves while switching the rotation direction as indicated by an arrow A5.

Moreover, as the ring gear member 13R thus moves, collision noise (hammering noise) occurs also at a meshing part of the counter drive gear 25 of the ring gear member 13R and the counter driven gear 26. For example, when a backlash closing torque is generated by the second rotating electric machine MG2, once the backlash closing torque is transmitted from the counter driven gear 26 toward the drive wheels W and the backlash is closed for the gears disposed on a path to the drive wheels W, the counter driven gear 26 becomes immovable. Therefore, after the backlash is closed, the counter driven gear 26 enters a fixed state (state where the backlash closing torque generated by the second rotating electric machine MG2 is absorbed by the drive wheels W), so that the backlash closing torque is not transmitted to the ring gear member 13R that is also the third rotating element of the planetary gear mechanism 10, and the backlash between the counter driven gear 26 and the ring gear member 13R cannot be closed. As a result, even when a backlash closing torque is generated by the second rotating electric machine MG2, collision noise occurs at the meshing part of the counter drive gear 25 of the ring gear member 13R and the counter driven gear 26.

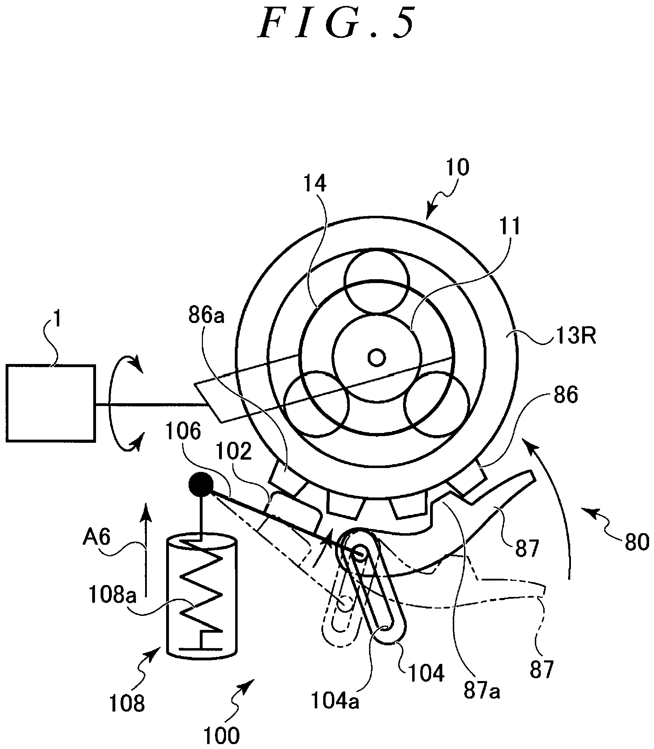

To reduce such collision noise (hammering noise), the first embodiment includes a resistance imposing device 100. The resistance imposing device 100 will be described with reference to FIG. 5. Similarly to FIG. 4, FIG. 5 is a schematic view of a part of the transmission system TM as seen from a side of a face of the planetary gear mechanism 10 orthogonal to a rotational axis, and shows particularly the configuration of the engine 1, the planetary gear mechanism 10, the parking lock mechanism 80, and the resistance imposing device 100 that are vehicle components involved in generation of collision noise. In FIG. 5, the parking lock pawl 87 in the parking unlock position (non-meshing position) is indicated by the two-dot dashed lines.

The resistance imposing device 100 includes a contact member 102 as a resistance imposing member, a first member 104 provided integrally with the parking lock pawl 87 and having a slide hole 104a, a second member 106 holding the contact member 102 and working in conjunction with the first member 104, and a buffer device 108 coupled to the second member 106. The second member 106 is mounted at one end on the first member 104 so as to be slidable along the slide hole 104a. When the parking lock pawl 87 is in the parking unlock position as indicated by the two-dot dashed lines in FIG. 5, the one end of the second member 106 is in a predetermined position inside the slide hole 104a so as to separate the contact member 102 from the ring gear member 13R.

When the P-range is selected and the parking lock pawl 87 is moved to the parking lock position (meshing position), the second member 106 moves along the slide hole 104a toward the ring gear member 13R. As a result, the contact member 102 held by the second member 106 comes closer to the parking gear 86 of the ring gear member 13R and comes in contact with a tooth 86a. As the contact member 102 thus comes in contact with the parking gear 86, friction occurs between the contact member 102 and the parking gear 86. This friction restricts movement of the ring gear member 13R (including the ring gear 13), so that movement of the claw 87a of the parking lock pawl 87 and the parking gear 86 relative to each other is restricted. A pressing force exerted by the contact member 102 on the parking gear 86 in this process is kept under a certain level by a compression spring 108a of the buffer device 108. Accordingly, the parking gear 86 is prevented from being subjected to an undue load when the contact member 102 comes in contact with the parking gear 86. The contact member 102 can be made of such a material that the contact member 102 does not damage the parking gear 86 (preferably a material having lower hardness than the ring gear member 13R). The contact member 102 can be made of such a material, because the vehicle speed is usually zero, i.e., the vehicle is parked, when the P-range is selected.

As has been described above, in the first embodiment, when the P-range is selected and the claw 87a of the parking lock pawl 87 meshes with the parking gear 86, the contact member 102 of the resistance imposing device 100 comes in contact with the parking gear 86, restricting movement of the ring gear member 13R (including the ring gear 13). Thus, it is possible to reduce collision noise occurring between the claw 87a and the parking gear 86, and to also reduce collision noise occurring at the meshing part of the counter drive gear 25 of the ring gear member 13R and the counter driven gear 26.

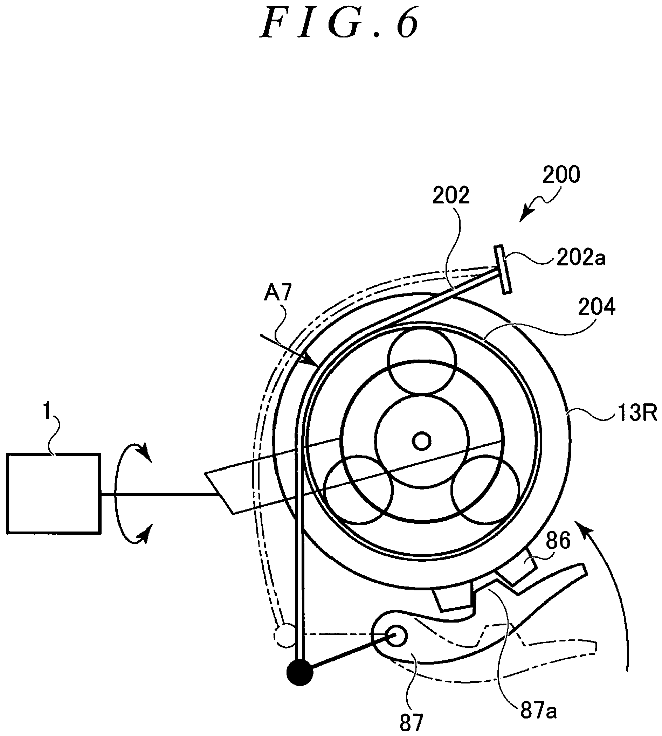

A second embodiment of the present invention will be described with reference to FIG. 6. The second embodiment is different from the first embodiment in terms of the configuration of the resistance imposing device. Therefore, the following description will be focused on components and functions characteristic of the second embodiment, while description of those that are obvious to persons skilled in the art by referring to the description of the first embodiment will be omitted or simplified. In the following description, components that have the same functions as the components already described in the first embodiment will be denoted by the same reference signs and overlapping description will be omitted. However, modifications and changes as described in the first embodiment are also applicable to the second embodiment unless inconsistency arises.

A resistance imposing device 200 of the second embodiment employs a flat spring friction member 202 as a resistance imposing member. With one end fixed to a fixing element (e.g., a case member) and the other end fixed to the parking lock pawl 87, the flat spring friction member 202 is configured to work in conjunction with an action of the parking lock pawl 87. The flat spring friction member 202 has elasticity in a direction away from the ring gear member 13R toward an outer side in a radial direction around a rotational axis of the ring gear member 13R. The ring gear member 13R is provided with an annular part 204 with which the flat spring friction member 202 can come in contact. The annular part 204 is provided integrally with the ring gear member 13R so as to protrude in a direction of the rotational axis of the ring gear member.

When the parking lock pawl 87 is in the parking unlock position (non-meshing position) as indicated by the two-dot dashed lines in FIG. 6 (i.e., when the P-range is not selected), the flat spring friction member 202 is separated out of contact with the ring gear member 13R due to the elasticity, and therefore does not prevent movement of the rotating elements in the drive line. When the P-range is selected, the parking lock pawl 87 moves to the parking lock position (meshing position), so that the flat spring friction member 202 is pulled in a direction opposite from the direction of the elasticity and butted against the annular part 204 of the ring gear member 13R as indicated by an arrow A7 of FIG. 6. Then, the flat spring friction member 202 restricts movement of the ring gear member 13R by a frictional force caused by this butting. Thus, the flat spring friction member 202 substantially restricts movement of both the ring gear 13 and the parking gear 86. As movement of the ring gear member 13R is restricted by the flat spring friction member 202, it is possible in the second embodiment, too, to reduce collision noise occurring between the claw 87a of the parking lock pawl 87 and the parking gear 86, and to also reduce collision noise occurring at the meshing part of the counter drive gear 25 of the ring gear member 13R and the counter driven gear 26.

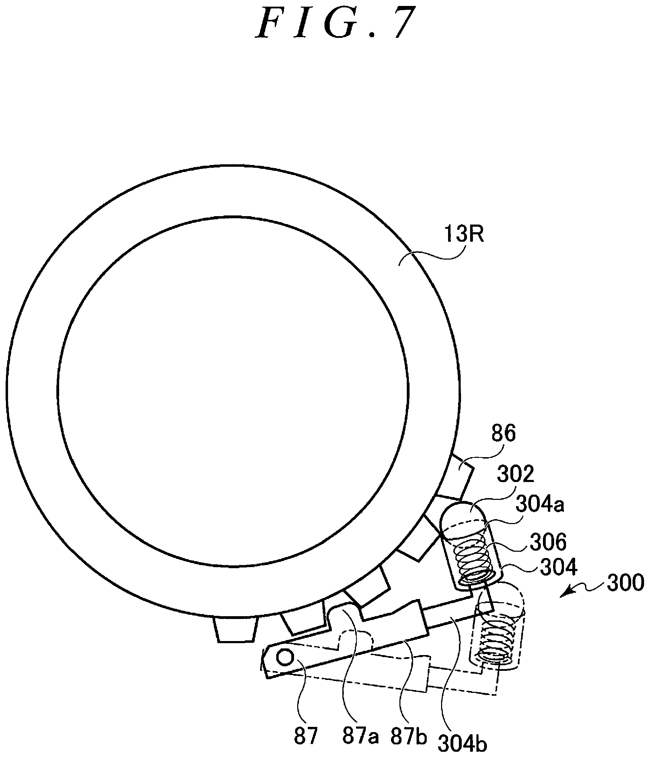

A third embodiment of the present invention will be described with reference to FIG. 7. The third embodiment is different from the first and second embodiments in terms of the configuration of the resistance imposing device. Therefore, the following description will be focused on components and functions characteristic of the third embodiment, while description of those that are obvious to persons skilled in the art by referring to the description of the above embodiments will be omitted or simplified. In the following description, components that have the same functions as the components already described in the above embodiments will be denoted by the same reference signs and overlapping description will be omitted. However, modifications and changes as described in the above embodiments are also applicable to the third embodiment unless inconsistency arises.

A resistance imposing device 300 of the third embodiment includes a ball member 302 as a resistance imposing member. In addition to the ball member 302, the resistance imposing device 300 also includes a housing member 304 that holds the ball member 302 so that the ball member 302 roughly half sticks out, and a spring member 306 that urges the ball member 302 to stick out of the housing member 304. A compression spring is used as the spring member 306. The ball member 302 has a diameter larger than a width of a tooth space (i.e., an interval between two adjacent teeth) of the parking gear 86 of the ring gear member 13R. The ball member 302 can be made of a material softer than the ring gear member 13R (preferably a material having lower hardness than the ring gear member 13R). Although this is not clear from FIG. 7, to prevent the ball member 302 from dropping out of the housing member 304, an opening 304a of the housing member 304 is processed so as to have a diameter smaller than an outer diameter of the ball member 302. The housing member 304 is provided on a member 304b that protrudes from a side of a free end 87b of the parking lock pawl 87.

When the parking lock pawl 87 is in the parking unlock position (non-meshing position) as indicated by the two-dot dashed lines in FIG. 7 (i.e., when the P-range is not selected), the ball member 302 is separated from the ring gear member 13R and therefore does not prevent movement of the rotating elements in the drive line. When the P-range is selected, as shown in FIG. 7, the parking lock pawl 87 moves to the parking lock position (meshing position), so that the ball member 302 meshes with tooth flanks of a tooth space of the parking gear 86 different from a tooth space defined by tooth flanks in mesh with the claw 87a of the parking lock pawl 87. This meshing friction restricts movement of the ring gear member 13R. Thus, in the third embodiment, too, it is possible to reduce collision noise occurring between the claw 87a and the parking gear 86, and to also reduce collision noise occurring at the meshing part of the counter drive gear 25 of the ring gear member 13R and the counter driven gear 26.

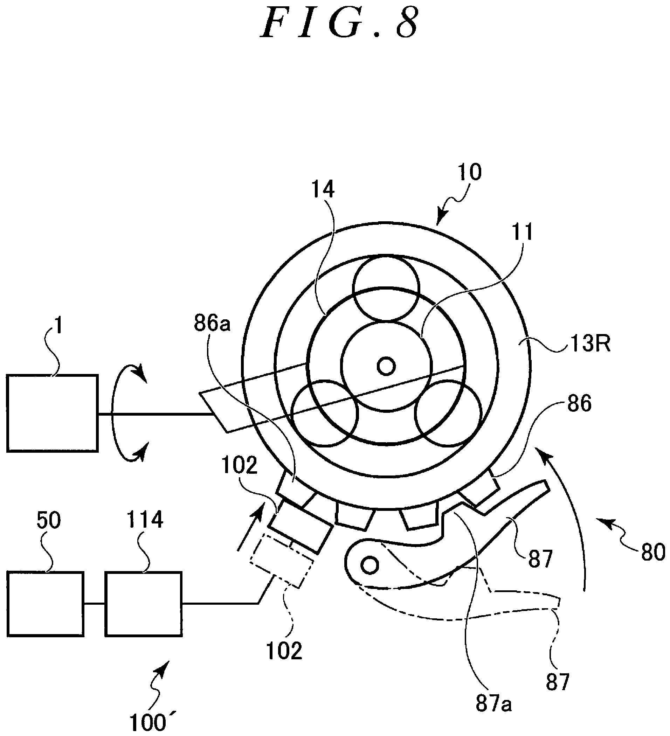

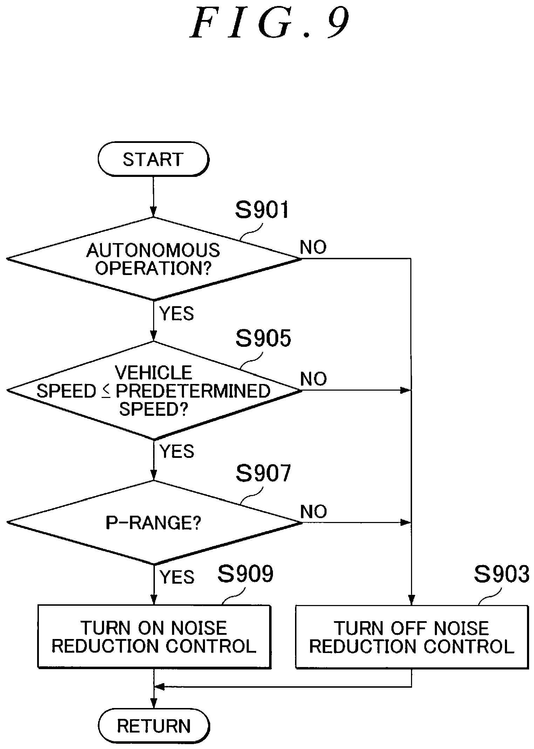

A fourth embodiment of the present invention will be described with reference to FIG. 8 and FIG. 9. The fourth embodiment corresponds to a modified version of the first embodiment. In the first embodiment, the contact member 102 as the resistance imposing member is mechanically coupled to the parking lock pawl 87 so as to work in conjunction with the parking lock pawl 87. In the fourth embodiment, by contrast, the contact member 102 as the resistance imposing member is moved by electronic control. In the following, the fourth embodiment will be described in terms only of differences from the first embodiment. As shown in FIG. 8, the contact member 102 is here connected to the actuator (drive unit that drives the resistance imposing member) 114, which is an electric motor, and the actuator 114 is activated on the basis of a control signal from the control unit (control unit that controls activation of the drive unit) of the HV_ECU 50. Thus, in the fourth embodiment, a resistance imposing device 100' is composed of the contact member 102, the actuator 114, and the control unit of the HV_ECU 50. In the following description, components that have the same functions as the components already described in the above embodiments will be denoted by the same reference signs and overlapping description will be omitted. However, modifications and changes as described in the above embodiments are also applicable to the fourth embodiment unless inconsistency arises.

Determination or control processing in steps S901 to S909 in the flowchart shown in FIG. 9 is performed by the control unit of the HV_ECU 50.

First, in step S901, it is determined whether the engine 1 is in an independent operation state. The control unit can determine whether the engine is operating independently on the basis of an output signal of the accelerator position sensor etc. Alternatively, when the HV_ECU 50 is controlling independent operation of the engine 1, the control unit can determine in step S901 that the engine 1 is in an independent operation state on the basis of a control command of the HV_ECU 50. Then, if the engine 1 is not in an independent operation state, the control unit determines in the negative in step S901. In the next step S903, noise reduction control for reducing collision noise is turned off, and then the current routine is ended. In this case, as the noise reduction control is turned off, the contact member 102 is maintained in an initial position away from the parking gear 86. On the other hand, if the engine 1 is in an independent operation state, the control unit determines in the affirmative in step S901, and proceeds to step S905. Here, on the assumption that the engine 1 is in an independent operation state, the control unit proceeds to step S905.

In step S905, it is determined whether the vehicle speed is equal to or lower than a predetermined speed. The predetermined speed is preferably 0 km/h. This vehicle speed is detected on the basis of an output of the vehicle speed sensor. In some cases, step S905 may be omitted, as this step is provided to prevent the noise reduction control for reducing collision noise from being executed when a driver inadvertently moves the shift lever into the P-range while the vehicle is in motion. If the vehicle speed is higher than the predetermined speed, i.e., the vehicle is moving, the control unit determines in the negative in step S905, and proceeds to step S903 described above. On the other hand, if the vehicle speed is equal to or lower than the predetermined speed, the control unit determines in the affirmative in step S905, and proceeds to the next step S907. Here, on the assumption that the vehicle speed is equal to or lower than the predetermined speed, the control unit proceeds to step S907.

In step S907, it is determined whether the P-range is selected. If a current shift position indicated by information acquired from the shift position sensor is in the P-range, the control unit determines in the affirmative in step S907, and proceeds to the next step S909. On the other hand, if the position is not in the P-range, the control unit determines in the negative in step S907, and proceeds to step S903 described above. Here, on the assumption that the current shift position is in the P-range, the control unit proceeds to step S909. In this case, as the shift position is in the P-range, the parking lock mechanism 80 is in the parking lock position (meshing position) and the claw 87a of the parking lock pawl 87 is in mesh with the parking gear 86.

In step S909, the noise reduction control for reducing collision noise is turned on. In other words, the noise reduction control is executed. Specifically, to execute the noise reduction control, the control unit of the HV_ECU 50 outputs an activation signal to the actuator 114, which drives the contact member 102, so as to bring the contact member 102 in contact with the parking gear 86. As a result, the contact member 102 is pressed against the parking gear 86, so that effects similar to the effects described in the first embodiment are achieved in the configuration of the fourth embodiment. Then, the current routine is ended. After the noise reduction control is executed and then processing of this flowchart is executed again, if execution conditions for the noise reduction control are not satisfied, the control unit of the HV_ECU 50 outputs an activation signal to the actuator 114, which drives the contact member 102, so as to separate the contact member 102, which has been in contact with the parking gear 86, out of contact with the parking gear 86 in processing of step S903.

Such electronic control by means of an actuator is also applicable to control of the flat spring friction member of the second embodiment and the ball member of the third embodiment. However, further description of these modified versions will be omitted.

In this embodiment, the resistance imposing member (contact member 102 etc.) comes in contact with the ring gear member 13R only at a required timing when the vehicle is in independent operation according to the determination in step S901. Thus, the contact time can be reduced compared with if the contact member comes in contact also when the vehicle is in an operation state other than an independent operation state. In other words, chances of wearing due to contact can be reduced, so that the lifespan of the resistance imposing member can be lengthened.

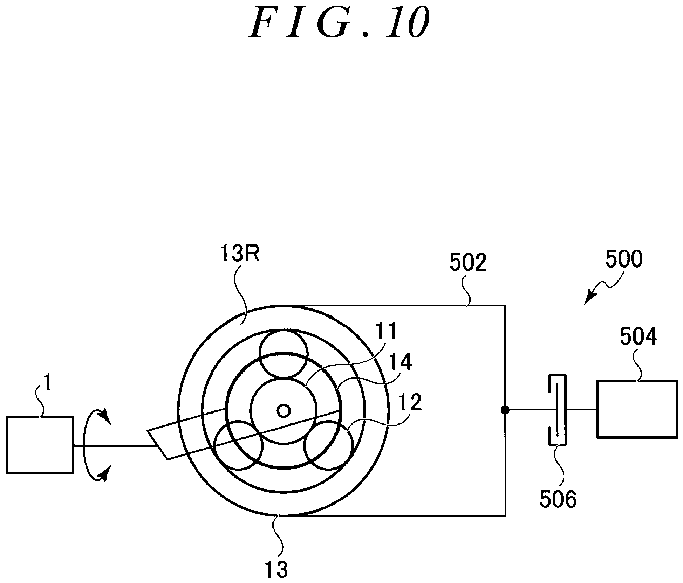

A fifth embodiment of the present invention will be described with reference to FIG. 10. The fifth embodiment is different from all the above embodiments in terms of the configuration of the resistance imposing device. Therefore, the following description will be focused on components and functions characteristic of the fifth embodiment, while description of those that are obvious to persons skilled in the art by referring to the description of the above embodiments will be omitted or simplified. In the following description, components that have the same functions as the components already described in the above embodiments will be denoted by the same reference signs and overlapping description will be omitted. However, modifications and changes as described in the above embodiments are also applicable to the fifth embodiment unless inconsistency arises.

A resistance imposing device 500 of the fifth embodiment includes a rotation restricting member 502 that is provided so as to rotate integrally with the ring gear 13, a clutch 506 as a resistance imposing member, and a drive device 504. The clutch 506 has a rotating body that is a pressed member coupled to the rotation restricting member 502 and rotating integrally therewith, and a pressing member that imposes a rotational resistance on the pressed member so as to restrict rotation thereof by a frictional force generated as the pressing member butts against the pressed member. Actions of the pressing member butting or not butting against the pressed member are hydraulically controlled. The drive device 504 has a hydraulic actuator that hydraulically controls the actions of the pressing member butting or not butting against the pressed member in the clutch 506 on the basis of a control signal from the HV_ECU 50. Thus, in the fifth embodiment, as in the fourth embodiment, when the parking lock pawl 87 is moved to the parking lock position (meshing position), no mechanical force is directly exerted on the rotation restricting member 502 in conjunction with movement of the parking lock pawl 87. Moreover, in the fifth embodiment, as in the fourth embodiment, when the control according to the flowchart of FIG. 9 is executed and the noise reduction control for reducing collision noise is executed in step S909, the drive device 504 is activated on the basis of a control signal from the HV_ECU 50. As the hydraulic actuator is thus activated, a hydraulic pressure is applied to the clutch 506 so as to cause the pressing member to butt against the pressed member (rotating body) coupled to the rotation restricting member 502 and thereby impose a rotational resistance on the rotation restricting member 502. As a result, the pressing member of the clutch 506 butts against (comes in contact with) the pressed member (rotating body), and a resulting frictional force imposes a rotational resistance on the rotation restricting member 502 coupled to the pressed member. Accordingly, rotation of the ring gear 13 rotating integrally with the rotation restricting member 502 is restricted, and movement of the ring gear member 13R is restricted. The rotation restricting member 502 is a part of the ring gear 13 that is the third rotating element, and the action of the pressing member of the clutch 506, which is the resistance imposing member, coming in contact with (butting against) the pressed member (rotating body) coupled to the rotation restricting member 502 is equivalent to the action of the resistance imposing member coming in contact with the third rotating element.

Thus, in the fifth embodiment, too, it is possible to reduce collision noise occurring between the claw 87a of the parking lock pawl 87 and the parking gear 86, and to also reduce collision noise occurring at the meshing part of the counter drive gear 25 of the ring gear member 13R and the counter driven gear 26. As the P-range is selected when a rotational resistance is thus imposed on the rotation restricting member 502, the parking lock pawl 87 is moved to the parking lock position (meshing position) and the claw 87a meshes with the parking gear 86.

Alternatively, in the above embodiments, the intensity with which the resistance imposing member is pressed against the ring gear member 13R may be changed according to a state of meshing between the claw 87a of the parking lock pawl 87 and the parking gear 86. Specifically, the intensity of pressing may be changed so that, in the state where the claw 87a is out of mesh with the parking gear 86 (only when the vehicle is parked), the resistance imposing member comes in contact with the ring gear member 13R, which is the third rotating element, with a smaller force, and on the other hand, in the state where the claw 87a is in mesh with the parking gear 86, the resistance imposing member comes in contact with the ring gear member 13R with a larger force.

The method for reducing hammering noise in the parking mechanism attributable to engine torque fluctuations occurring while the parking range is selected and the parking mechanism is working in a hybrid electric vehicle has been described above. Here, the cause of occurrence of hammering noise addressed by the present invention will be described again.

Hammering noise occurs due to a phenomenon that, when a backlash closing torque generated by the rotating electric machine is transmitted to the third rotating element, a backlash at a meshing part of gears between the rotating electric machine and the drive wheels is closed before a backlash at a meshing part of gears between the third rotating element and the rotating electric machine is closed, i.e., before the torque of the rotating electric machine is transmitted to the third rotating element, which results in the torque of the rotating electric machine being transmitted to only the drive wheels.

Specifically, in the drive line of the hybrid electric vehicle of the first embodiment shown in FIG. 1, the backlash between the drive pinion gear 28 and the differential ring gear 29 is closed before the backlash between the counter drive gear 25 and the counter driven gear 26 is closed. In this case, as already described, the backlash closing torque output from the rotating shaft 34 of the second rotating electric machine MG2 is transmitted to the drive wheels W through the counter driven gear 26 and the drive pinion gear 28 before being transmitted to the counter drive gear 25 through the counter driven gear 26. As a result, hammering noise (collision noise) occurs at the meshing part of the counter drive gear 25 and the counter driven gear 26. However, hammering noise occurring at the meshing part of these gears can be reduced by using the noise reduction techniques described above.

The 'gear' of the present invention that transmits power by being interposed among the third rotating element, the drive wheels, and the rotating shaft of the rotating electric machine refers to each of a gear that transmits a torque generated by the rotating electric machine to the third rotating element and a gear that transmits the torque to the drive wheels. That is, the gear of the present invention is a gear that transmits power by being interposed among the counter drive gear 25 (that rotates integrally with the ring gear 13 being the third rotating element), the drive wheels W, and the rotating shaft 34 of the second rotating electric machine MG2. In the drive line of the hybrid electric vehicle of the first embodiment, the counter driven gear 26 that transmits a torque to the third rotating element and the drive pinion gear 28 that transmits a torque to the drive wheels W correspond to the gear of the present invention.

Hammering noise may also occur in other configurations in which the drive line shown in the first embodiment is partially modified. In the following, such configurations of modified examples of the drive line in which hammering noise occurs will be described. The following description will be focused on configurations characteristic of the modified examples, while description of those that are obvious to persons skilled in the art by referring to the description of the first embodiment will be omitted or simplified. Components that have the same functions as the components already described in the first embodiment will be denoted by the same reference signs and overlapping description will be omitted. However, modifications and changes as described above are also applicable to the following modified examples unless inconsistency arises.

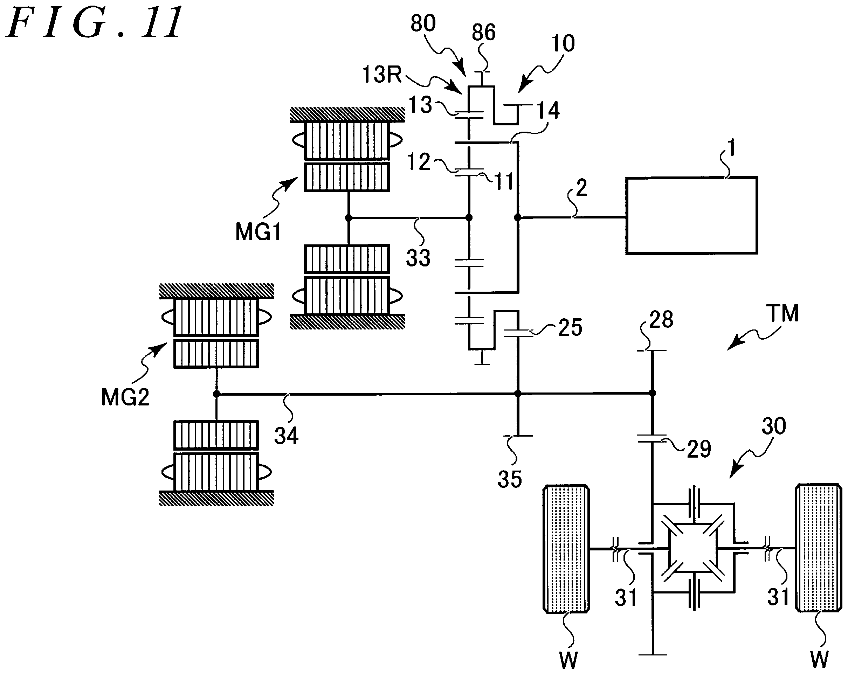

A drive line of a hybrid electric vehicle of Modified Example 1 will be described with reference to the skeleton diagram of FIG. 11. Modified Example 1 is one example of a configuration in which the reduction gear 35 of the second rotating electric machine MG2 directly meshes with the ring gear member 13R.

As shown in FIG. 11, in the drive line of the hybrid electric vehicle of Modified Example 1, the counter drive gear 25 of the ring gear member 13R is in mesh with the reduction gear 35. The reduction gear 35 is fixed to the rotating shaft 34 of the second rotating electric machine MG2. The drive pinion gear 28 meshing with the differential ring gear 29 of the differential 30 is fixed to the rotating shaft 34. Thus, the ring gear 13 is connected to the rotating shaft 34 of the second rotating electric machine MG2 through the counter drive gear 25 and the reduction gear 35, and at the same time is connected to the drive wheels W through the rotating shaft 34, the drive pinion gear 28, the differential 30, and the drive shafts 31. Accordingly, a torque (power) output from the rotating shaft 34 of the second rotating electric machine MG2 is transmitted to the drive wheels W through the drive pinion gear 28. At the same time, the torque (power) output from the rotating shaft 34 of the second rotating electric machine MG2 is transmitted to the counter drive gear 25 (and the ring gear 13) of the ring gear member 13R through the reduction gear 35.

In the drive line of the hybrid electric vehicle of Modified Example 1 as described above, a backlash between the drive pinion gear 28 and the differential ring gear 29 is closed before a backlash between the counter drive gear 25 and the reduction gear 35 is closed. In this case, a backlash closing torque output from the rotating shaft 34 of the second rotating electric machine MG2 is transmitted to the drive wheels W through the drive pinion gear 28 before being transmitted to the counter drive gear 25 through the reduction gear 35. As a result, hammering noise occurs at a meshing part of the counter drive gear 25 and the reduction gear 35. However, hammering noise occurring at the meshing part of these gears can be reduced by using the noise reduction techniques described above.

The 'gear' in the present invention is the gear that transmits power by being interposed among the counter drive gear 25, the drive wheels W, and the rotating shaft 34 of the second rotating electric machine MG2. In the drive line of the hybrid electric vehicle of Modified Example 1, this gear corresponds to the reduction gear 35 that transmits a torque to the third rotating element and the drive pinion gear 28 that transmits a torque to the drive wheels W.

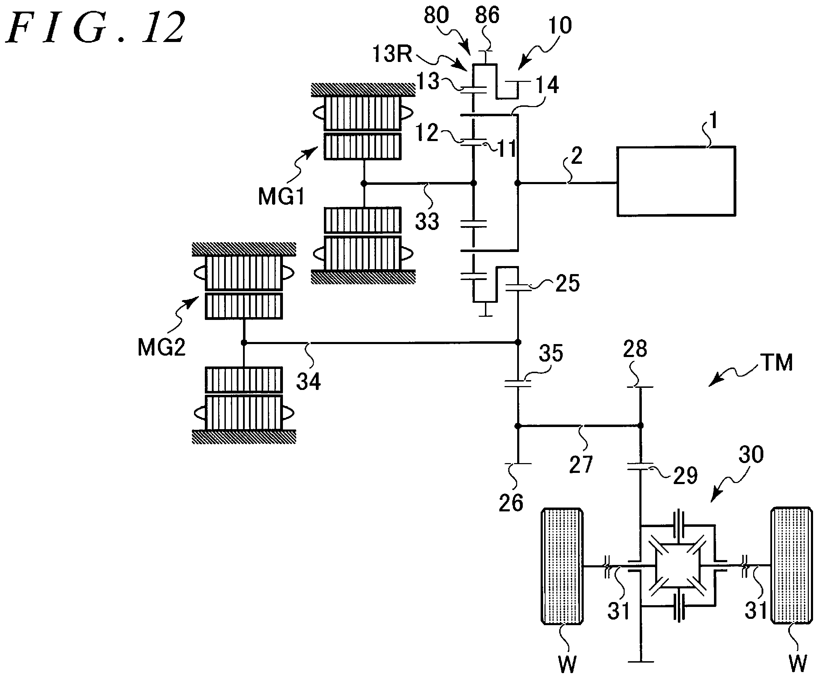

A drive line of a hybrid electric vehicle of Modified Example 2 will be described with reference to the skeleton diagram of FIG. 12. This Modified Example 2 is also one example of a configuration in which the reduction gear 35 of the second rotating electric machine MG2 directly meshes with the ring gear member 13R.

As shown in FIG. 12, in the drive line of the hybrid electric vehicle of Modified Example 2, the counter drive gear 25 of the ring gear member 13R is in mesh with the reduction gear 35. The reduction gear 35 is fixed to the rotating shaft 34 of the second rotating electric machine MG2. The counter driven gear 26 is in mesh with the reduction gear 35. The counter driven gear 26 is connected through the counter shaft 27 to the drive pinion gear 28 meshing with the differential ring gear 29 of the differential 30. The counter driven gear 26 and the drive pinion gear 28 rotate integrally. Thus, the ring gear 13 is connected to the rotating shaft 34 of the second rotating electric machine MG2 through the counter drive gear 25 and the reduction gear 35, and at the same time is connected to the drive wheels W through the reduction gear 35, the counter driven gear 26, the drive pinion gear 28, the differential 30, and the drive shafts 31. Accordingly, a torque (power) output from the rotating shaft 34 of the second rotating electric machine MG2 is transmitted to the drive wheels W through the reduction gear 35, the counter driven gear 26, and the drive pinion gear 28. At the same time, the torque (power) output from the rotating shaft 34 of the second rotating electric machine MG2 is transmitted to the counter drive gear 25 (and the ring gear 13) of the ring gear member 13R through the reduction gear 35.

In the drive line of the hybrid electric vehicle of Modified Example 2 as described above, a backlash between the reduction gear 35 and the counter driven gear 26 is closed before a backlash between the counter drive gear 25 and the reduction gear 35 is closed. In this case, a backlash closing torque output from the rotating shaft 34 of the second rotating electric machine MG2 is transmitted to the drive wheels W through the reduction gear 35 and the counter driven gear 26 before being transmitted to the counter drive gear 25 through the reduction gear 35. As a result, hammering noise occurs at a meshing part of the counter drive gear 25 and the reduction gear 35. However, hammering noise occurring at the meshing part of these gears can be reduced by using the noise reduction techniques described above.

The 'gear' in the present invention is the gear that transmits power by being interposed among the counter drive gear 25, the drive wheels W, and the rotating shaft 34 of the second rotating electric machine MG2. In the drive line of the hybrid electric vehicle of Modified Example 2, this gear corresponds to the reduction gear 35 that transmits a torque to the third rotating element and the drive wheels W.

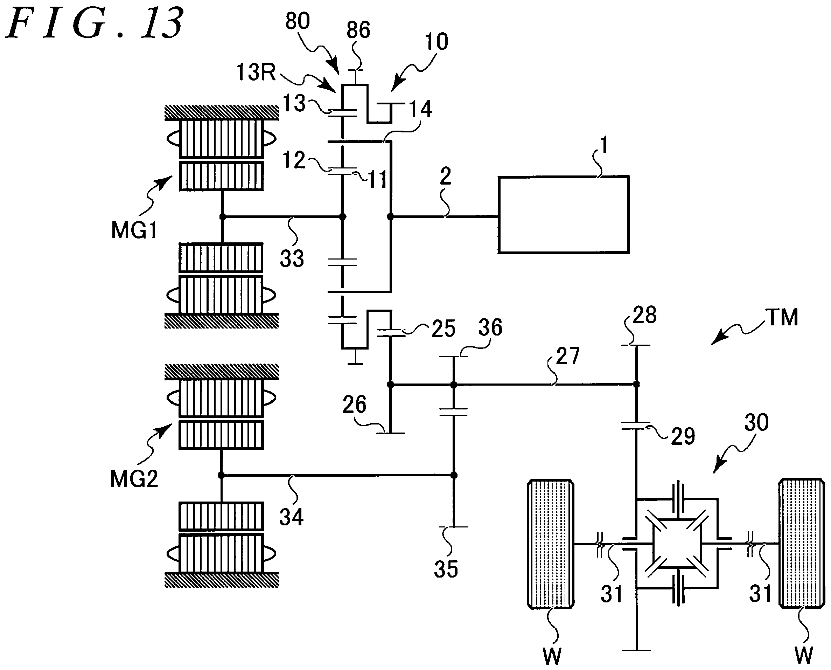

A drive line of a hybrid electric vehicle of Modified Example 3 will be described with reference to the skeleton diagram of FIG. 13. Modified Example 3 is one example of a configuration in which the reduction gear 35 of the second rotating electric machine MG2 meshes with a gear other than the counter driven gear 26 provided on the counter shaft 27.

As shown in FIG. 13, in the drive line of the hybrid electric vehicle of Modified Example 3, the counter drive gear 25 of the ring gear member 13R is in mesh with the counter driven gear 26. The counter driven gear 26 is connected through the counter shaft 27 to the drive pinion gear 28 meshing with the differential ring gear 29 of the differential 30. The counter driven gear 26 is connected through the counter shaft 27 also to a second counter driven gear 36 meshing with the reduction gear 35. The counter driven gear 26, the second counter driven gear 36, and the drive pinion gear 28 rotate integrally. The rotating shaft 34 of the second rotating electric machine MG2 is fixed to the reduction gear 35. Thus, the ring gear 13 is connected to the drive wheels W through the counter drive gear 25, the counter driven gear 26, the drive pinion gear 28, the differential 30, and the drive shafts 31. The rotating shaft 34 of the second rotating electric machine MG2 is connected to a power transmission path between the ring gear 13 and the drive wheels W through the counter driven gear 26, and can transmit a torque (power) to each of the ring gear 13 and the drive wheels W. Accordingly, a torque (power) output from the rotating shaft 34 of the second rotating electric machine MG2 is transmitted to the drive wheels W through the drive pinion gear 28. At the same time, the torque (power) output from the rotating shaft 34 of the second rotating electric machine MG2 is transmitted to the counter drive gear 25 (and the ring gear 13) of the ring gear member 13R through the counter driven gear 26.

In the drive line of the hybrid electric vehicle of Modified Example 3 as described above, a backlash between the drive pinion gear 28 and the differential ring gear 29 is closed before a backlash between the counter drive gear 25 and the counter driven gear 26 is closed. In this case, a backlash closing torque output from the rotating shaft 34 of the second rotating electric machine MG2 is transmitted to the drive wheels W through the drive pinion gear 28 before being transmitted to the counter drive gear 25 through the counter driven gear 26. As a result, hammering noise occurs at the meshing part of the counter drive gear 25 and the counter driven gear 26. However, the hammering noise occurring at the meshing part of these gears can be reduced by using the noise reduction techniques described above.

The 'gear' in the present invention is the gear that transmits power by being interposed among the counter drive gear 25, the drive wheels W, and the rotating shaft 34 of the second rotating electric machine MG2. In the drive line of the hybrid electric vehicle of Modified Example 3, this gear corresponds to the counter driven gear 26 that transmits a torque to the third rotating element and the drive pinion gear 28 that transmits a torque to the drive wheels W.

Embodiments of the present invention are not limited to the above-described embodiments. The present invention includes any modifications, applications, and equivalents covered by the concept of the present invention specified in the claims.

## Claims

1. A transmission system for a hybrid electric vehicle, the transmission system (TM) comprising:
a planetary gear mechanism (10) including a first rotating element (14), a second rotating element (11), and a third rotating element (13), the first rotating element (14) being coupled to an engine (1), the third rotating element (13) being coupled to a rotating electric machine (MG2) and drive wheels (W) to transmit power to the rotating electric machine (MG2) and the drive wheels (W);
a gear (25) interposed between the third rotating element (13) on one side and the rotating electric machine (MG2) and the drive wheels (W) on the other side to transmit power from the third rotating (13) element to the rotating electric machine (MG2) and the drive wheels (W) ;
a parking lock mechanism (80) including a parking gear (86) and a parking meshing member (87), the parking gear (86) being configured to rotate integrally with the third rotating element (13), the parking meshing member (87) including a claw (87a) configured to mesh with the parking gear (86), and being configured to act so as to switch between a first state where the claw (87a) is in mesh with the parking gear (86) and a second state where the claw (87a) is out of mesh with the parking gear (86), according to whether a parking range is selected; and
a resistance imposing device (100, 200, 300, 500) including a resistance imposing member (102, 202, 302, 506), the resistance imposing member (102, 202, 302, 506) being configured to impose a rotational resistance on the parking gear (86) or the third rotating element (13) by coming in contact with the parking gear (86) or the third rotating element (13), the resistance imposing device (100, 200, 300, 500) being configured to operate the resistance imposing member (102, 202, 302, 506) such that a larger rotational resistance is imposed on the parking gear (86) or the third rotating element (13) in the first state than in the second state.

2. The transmission system for a hybrid electric vehicle according to claim 1, wherein the resistance imposing device (100, 200, 300) is configured to operate the resistance imposing member (102, 202, 302) in conjunction with an action of the parking meshing member (87) such that, the resistance imposing member (102, 202, 302) is separated from the parking gear (86) or the third rotating element (13) in the second state, and the resistance imposing member (102, 202, 302) is in contact with the parking gear (86) or the third rotating element (13) in the first state.

3. The transmission system for a hybrid electric vehicle according to claim 1 or 2, wherein the resistance imposing member (102, 202, 302) is mechanically coupled to the parking meshing member (87).

4. The transmission system for a hybrid electric vehicle according to claim 1, wherein:
the resistance imposing device (100) includes a drive unit (114) and an electronic control unit (50);
the drive unit (114) is configured to drive the resistance imposing member (102) so as to change a state of contact between the resistance imposing member (102) and the parking gear (86) or the third rotating element (13); and
the electronic control unit (50) is configured to control the drive unit such that the resistance imposing member (102) imposes a larger rotational resistance on the parking gear (86) or the third rotating element (13) in the first state than in the second state.

5. The transmission system for a hybrid electric vehicle according to claim 4, wherein the electronic control unit (50) is configured to control the drive unit (114) such that the resistance imposing member (102) imposes a larger rotational resistance on the parking gear (86) or the third rotating element (13) when the engine is in an independent operation.

6. The transmission system for a hybrid electric vehicle according to any one of claims 1 to 3, wherein the resistance imposing member (302) is configured to, in conjunction with an action of the parking meshing member (87), come in contact with tooth flanks of a tooth space of the parking gear (86) different from a tooth space defined by tooth flanks in mesh with the claw (87a) in the first state.

7. The transmission system for a hybrid electric vehicle according to claim 1, wherein:
the third rotating element (13) includes a rotation restricting member (502) that is provided so as to rotate integrally with the parking gear (86);
the resistance imposing member (506) is configured to impose the rotational resistance on the third rotating element (13) by coming in contact with the rotation restricting member (502); and
the resistance imposing device (500) is configured to operate the resistance imposing member such that a larger rotational resistance is imposed on the third rotating element (13) in the first state than in the second state.
